(19)

**Europäisches Patentamt**
**European Patent Office**
**Office européen des brevets**

(11)  **EP 4 779 977 A1**

(12)  **EUROPEAN PATENT APPLICATION**

(43) Date of publication:
**22.07.2026  Bulletin 2026/30**

(21) Application number: **25305045.4**

(22) Date of filing: **15.01.2025**

(51) International Patent Classification (IPC):
**H04N 19/117** (2014.01)    **H04N 19/176** (2014.01)
**H04N 19/70** (2014.01)     **H04N 19/82** (2014.01)

(52) Cooperative Patent Classification (CPC):
**H04N 19/117; H04N 19/176; H04N 19/70;**
**H04N 19/82**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LEFEBVRE, Frederic**
**35000 RENNES (FR)**
• **BORDES, Philippe**
**35890 LAILLE (FR)**
• **BOISSON, Guillaume**
**35137 PLEUMELEUC (FR)**
• **GALPIN, Franck**
**35235 THORIGNE-FOUILLARD (FR)**

(74) Representative: **Interdigital**
**Immeuble ZEN 2**
**845 A, avenue des Champs Blancs**
**35510 Cesson-Sévigné (FR)**

(54)  **MULTIPLE INSTANCE PICTURES IN REFERENCE PICTURE BUFFER**

(57)    In an embodiment, a method for video decoding is provided, the method comprising: decoding a current picture of a video providing a decoded picture, obtaining a first reference picture from the decoded picture, the first reference picture being a reconstructed picture output by an in-loop filtering process, decoding an indication indicating that at least one part of at least one second reference picture has to be determined from the decoded picture, the at least one second reference picture being distinct from the first reference picture, determining at least one part of the at least one second reference picture using a filtering of the decoded picture, decoding at least one block of a next picture of the video using the at least one part of the at least one second reference picture.

**FIG. 15**

## Description

### BACKGROUND

The present application is related to video compression. The present embodiments relate to a method and an apparatus for encoding or decoding an image or a video. More particularly, the present embodiments relate to improving inter prediction in video compression system.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

### BRIEF SUMMARY

In an embodiment, a method for video decoding is provided, the method comprising: decoding a current picture of a video providing a decoded picture, obtaining a first reference picture from the decoded picture, the first reference picture being a reconstructed picture output by an in-loop filtering process, decoding an indication indicating that at least one part of at least one second reference picture has to be determined from the decoded picture, the at least one second reference picture being distinct from the first reference picture, determining at least one part of the at least one second reference picture using a filtering of the decoded picture, decoding at least one block of a next picture of the video using the at least one part of the at least one second reference picture. In another embodiment, a method for video encoding is provided, including: encoding and decoding a current picture of a video providing a decoded picture, obtaining a first reference picture from the decoded picture, the first reference picture being a reconstructed picture output by an in-loop filtering process, determining at least one part of at least one second reference picture from the decoded picture using a filtering of the decoded picture, the at least one second reference picture being distinct from the first reference picture, determining whether the at least one second reference picture is to be used as a reference picture for encoding at least one block of a next picture of the video, responsive to the determination that the at least one second reference picture is to be used as a reference picture for encoding at least one block of a next picture, encoding an indication indicating that at least one part of the at least one second reference picture has to be determined from the decoded picture at a decoder, encoding the at least one block of the next picture using the at least one part of the at least one second reference picture.

In a variant of these embodiments, determining the at least one part of the at least one second reference picture using the filtering of the decoded picture comprises at least one of filtering a selected version of the decoded picture at an intermediate stage of the in-loop filtering process, or filtering the first reference picture.

In a variant of these embodiments, the filtering of the decoded picture is a Gaussian-based filtering. The Gaussian-based filtering can be applying one or more Gaussian filters to the decoded picture. For example, the filtering of the decoded picture is a Bilateral filtering.

In another variant of these embodiments, the filtering of the decoded picture is a filtering using oriented filters, such as ALF filtering.

In another embodiment, a method for video decoding is provided, the method comprising: decoding a current picture of a video providing a decoded picture, obtaining a first reference picture from the decoded picture, the first reference picture being a reconstructed picture output by an in-loop filtering process, decoding an indication indicating that at least one part of at least one second reference picture has to be determined from the decoded picture, the at least one second reference picture being distinct from the first reference picture, selecting a version of the decoded picture at an intermediate stage of the in-loop filtering process as the at least one second reference picture, decoding at least one block of a next picture of the video using the at least one part of the at least one second reference picture.

In another embodiment, a method for video encoding is provided that includes encoding and decoding a current picture of a video providing a decoded picture, obtaining a first reference picture from the decoded picture, the first reference picture being a reconstructed picture output by an in-loop filtering process, selecting a version of the decoded picture at an intermediate stage of the in-loop filtering process as at least one second reference picture, determining whether the at least one second reference picture is to be used as a reference picture for encoding at least one block of a next picture of the video, responsive to the determination that the at least one second reference picture is to be used as a reference picture for encoding at least one block of a next picture, encoding an indication indicating that at least one part of the at least one second reference picture has to be determined from the decoded picture at a decoder, encoding the at least one block of the next picture using the at least one part of the at least one second reference picture.

In an embodiment, a method for video decoding is provided wherein, for at least one block of an image of the video, a prediction area in a reference picture is obtained and one or more filter parameters are obtained. The prediction area is filtered with the using the one or more filter parameters providing a filtered prediction area, and the at least one block is decoded using the filtered prediction area.

In a variant, the reference picture is one of a selected version of a previously decoded picture at an intermediate stage of an in-loop filtering process or a previously reconstructed picture output by the in-loop filtering process. In another variant, the one or more filter parameters are determined for the at least one block. In a further variant, the one or more filter parameters are determined for the at least one block based on a size of the at least one block or one quantization parameter used for encoding the at least one block or decoded from a bitstream.

In a variant, filtering the prediction area using the one or more filter parameters is a Gaussian-based filtering. The Gaussian-based filtering can be applying one or more Gaussian filters to the prediction area. For example, the filtering of the prediction area is a Bilateral filtering.

In another variant, the filtering of the prediction area is a filtering using oriented filters, such as ALF filtering.

For example, the one or more filter parameters of a gaussian-based filtering comprise at least one of a spatial filter variance, a range filter variance or a type of guided filter. In another example, the one or more filter parameters are stored in a Look-Up-Table. In another variant, the filter parameters depend on at least one of a temporal level of the image, a temporal level of the reference picture, a temporal distance between the image and the reference picture.

In a variant, the method further comprises decoding an indication of a number of a plurality of one or more filter parameters and decoding the plurality of one or more filter parameters. In a further variant, the one or more filter parameters or the plurality of one or more filter parameters are decoded in association with the image or in association with the reference picture.

In another variant, filtering the prediction area comprises filtering the reference picture providing a filtered reference picture and storing the filtered reference picture in a decoded picture buffer in addition to or in replacement of the reference picture.

In another variant, filtering the prediction area comprises filtering the reference picture providing a filtered reference picture and storing the filtered reference picture in a processing picture buffer distinct from a decoded picture buffer that stores the reference picture.

In another variant, the method comprises decoding an indication indicating whether the at least one block is decoded using the filtered prediction area or the prediction area.

In another embodiment, a method for video encoding is provided, that comprises, for at least one block of an image of the video: obtaining a prediction area in a reference picture, obtaining a plurality of sets of one or more filter parameters, filtering the prediction area with the using the plurality of sets of one or more filter parameters providing a plurality of filtered prediction areas, selecting one set of the sets of one or more filter parameters among the plurality of sets of one or more filter parameters based on at least a distortion cost between the filtered prediction area and a corresponding area in the image, encoding the at least one block using a filtered prediction area provided by the selected set of one or more filter parameters, encoding an indication indicating the selected set of one or more filter parameters.

In another embodiment, an apparatus is provided that comprises one or more processors configured to implement any one of the methods mentioned above.

Further embodiments that can be used alone or in combination are described herein.

One or more embodiments also provide a computer program comprising instructions which when executed by one or more processors cause the one or more processors to perform any one of the methods for encoding or decoding a video according to any of the embodiments described herein. One or more of the present embodiments also provide a non-transitory computer readable medium and/or a computer readable storage medium having stored thereon instructions for encoding or decoding a video according to the methods described herein.

One or more embodiments also provide a computer readable storage medium having stored thereon a bitstream generated according to the methods described herein. One or more embodiments also provide a method and apparatus for transmitting or receiving the bitstream generated according to the methods described above.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

**EP 4 779 977 A1**

FIG. 3 is a block diagram illustrating an example video decoder according to one or more embodiments of the present disclosure;

FIG. 4 illustrates an example of loop filters in VVC;

FIG. 5 illustrates an example of CCALF in VVC;

FIG. 6 illustrates an example of additional loop filters implemented in ECM;

FIG. 7 illustrates an example of an 8x8 transform unit (TU) block and the filter aperture for the sample located at (1,1);

FIG. 8 illustrates an example of use of a coefficient look-up-table used to obtain the weights of the filter;

FIG. 9 illustrates an example of in-loop filtering in ECM including: Deblocking Filter (DBF), SAO (Sample Adaptive Offset), CCSAO (Cross-Component Sample Adaptive Offset), BIF (Bilateral Filter), ALF (Adaptive Loop Filter), CCALF (Cross-Component Adaptive Loop Filter);

FIG. 10 illustrates an example of temporal prediction structure for encoding a video sequence and corresponding POC (Picture Order Count) values of the images;

FIG. 11 illustrates an example of temporal prediction structure for encoding a video sequence and corresponding POC values, decoding order and temporal level (TiD0, TiD1, TiD2) in the temporal prediction structure;

FIG. 12 is a block diagram illustrating an example video encoder according to another embodiment of the present disclosure;

FIG. 13 is a block diagram illustrating an example video decoder according to another embodiment of the present disclosure;

FIG. 14 illustrates an example of a method for determining if a supplemental reference picture is used at the encoder to perform encoding of a next frame, according to an embodiment;

FIG. 15 illustrates an example of a method for decoding a block of video according to an embodiment;

FIG. 16 illustrates an example of a method for decoding a block of video according to another embodiment;

picture is used at the encoder to perform encoding of a next frame, according to an embodiment;

FIG. 17 illustrates an example of a method for encoding a block of video according to an embodiment;

FIG. 18 illustrates an example of a method for encoding a block of video according to another embodiment;

FIG. 19 illustrates an example of a method for decoding a block of video according to another embodiment;

FIG. 20 illustrates an example of a method for encoding a block of video according to another embodiment;

FIG. 21 illustrates an example of a method for decoding a block of video according to another embodiment;

FIG. 22 illustrates an example of a method for encoding a block of video according to another embodiment;

FIG. 23 illustrates an example of a method for signaling filter parameters used in one of the method described herein, according to an embodiment;

FIG. 24 illustrates an example of a method for decoding filter parameters used in one of the method described herein, according to an embodiment;

FIG. 25 shows two remote devices communicating over a communication network in accordance with an example of the present principles.

FIG. 26 shows the syntax of a signal in accordance with an example of the present principles.


## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

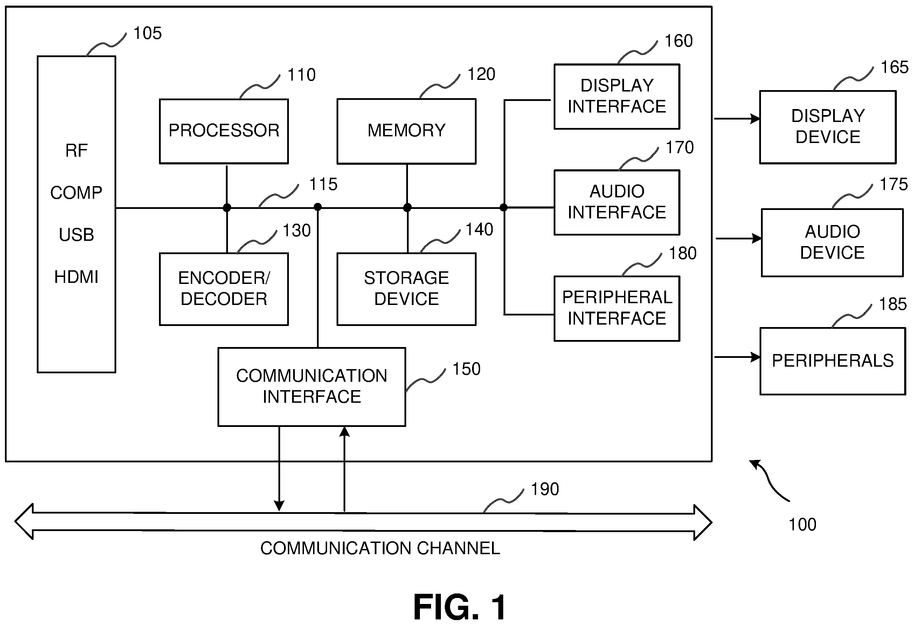

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

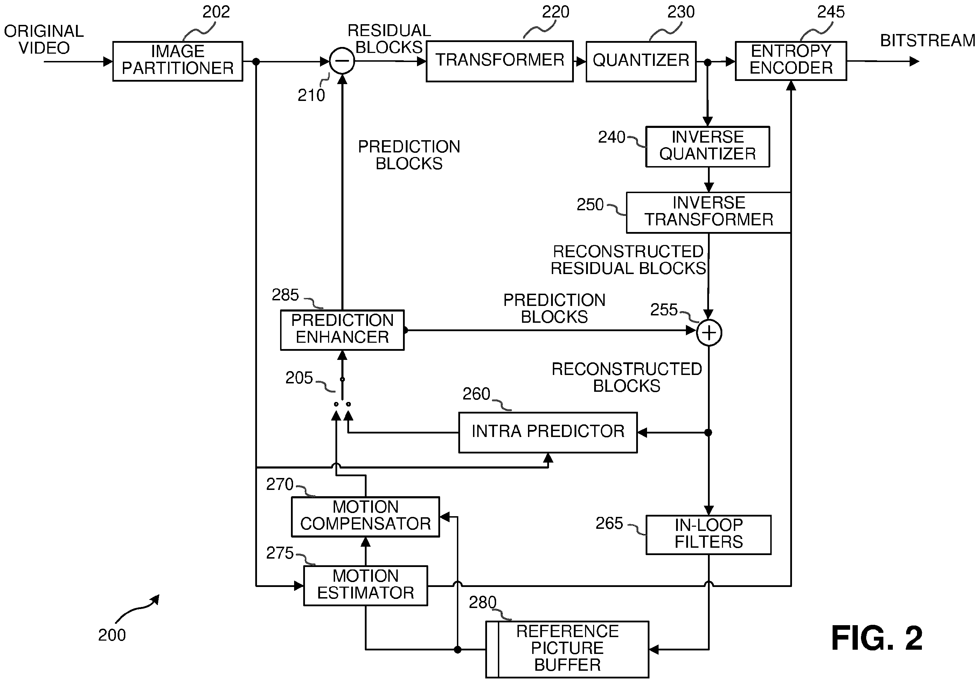

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

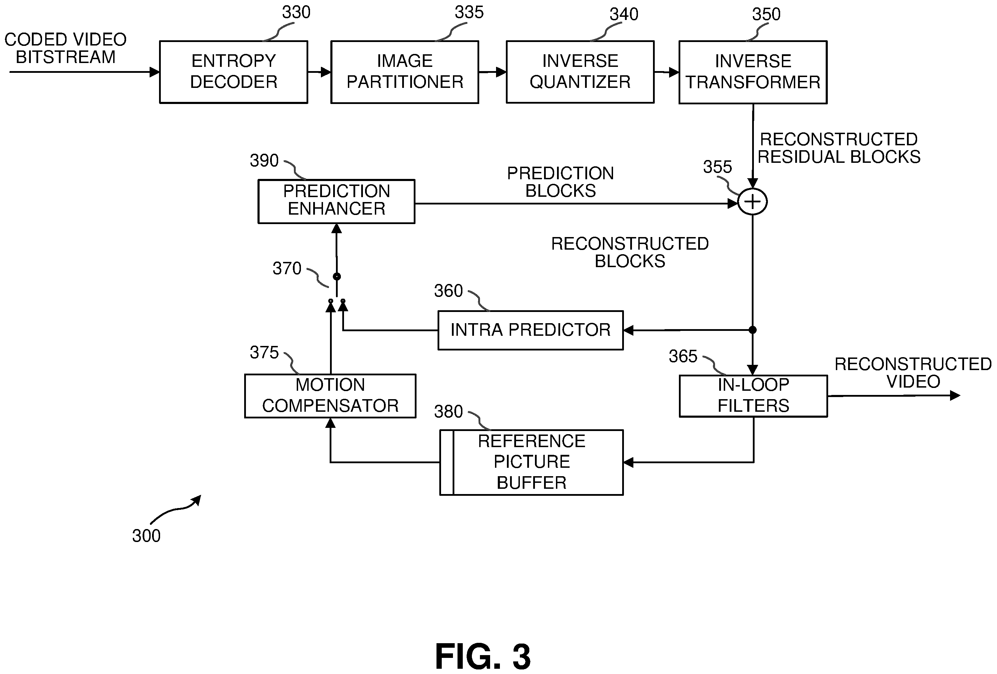

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340, and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

In-loop filters

Block-based intra/inter prediction and transform coding, together with residues quantization, induce a variety of artifacts in the reconstructed blocks, at medium and low bitrates. In order to reduce those artifacts in the reconstructed frames, video coding standards, such as VVC, and state-of-the-art video coding solutions, such as ECM, implement in-loop filters, such as deblocking filtering (DBF), Bilateral filtering (BIF), Sample-adaptive offset (SAO) and Adaptive loop filtering (ALF).

Deblocking filter (DBF) aims at smoothing discontinuities that may appear along block boundaries. Sample-adaptive offset (SAO) is designed to attenuate artifacts occurring around edges and correct the local average intensity changes (e.g. banding artifacts) with offsets signalled in the bitstream. Bilateral filter (BIF) aims at denoising further reconstructed pictures from artifacts induced by quantization of the prediction residues in the Transform domain. Adaptive loop filters (ALF) are determined at encoder side as optimal filters according to a rate-distortion criterion. ALF filters are transmitted along with the bitstream, then retrieved and used at decoder side.

In-loop filters in Versatile Video Coding (VVC)

The VVC standard implements three kinds of in-loop filters: deblocking filter (DBF), Sample-adaptive offset (SAO), and Adaptive loop filter (ALF) (*M. Karczewicz, N. Hu, J. Taquet, C.-Y. Chen, K. Misra , K. Andersson, P. Yin , T. Lu , E. Franç ois , and J. Chen, "VVC In-Loop Filters", IEEE TRANSACTIONS ON CIRCUITS AND SYSTEMS FOR VIDEO TECHNOLOGY, VOL. 31, NO. 10, OCTOBER 2021*). The deblocking filter aims at reducing blocking discontinuities. Sample-adaptive offset mostly aims at reducing artifacts resulting from the quantization of transform coefficients. Adaptive loop filter and Cross-component adaptive loop filter are adaptive filters enabling to enhance the reconstructed signal, using for instance Wiener-filter encoding approaches.

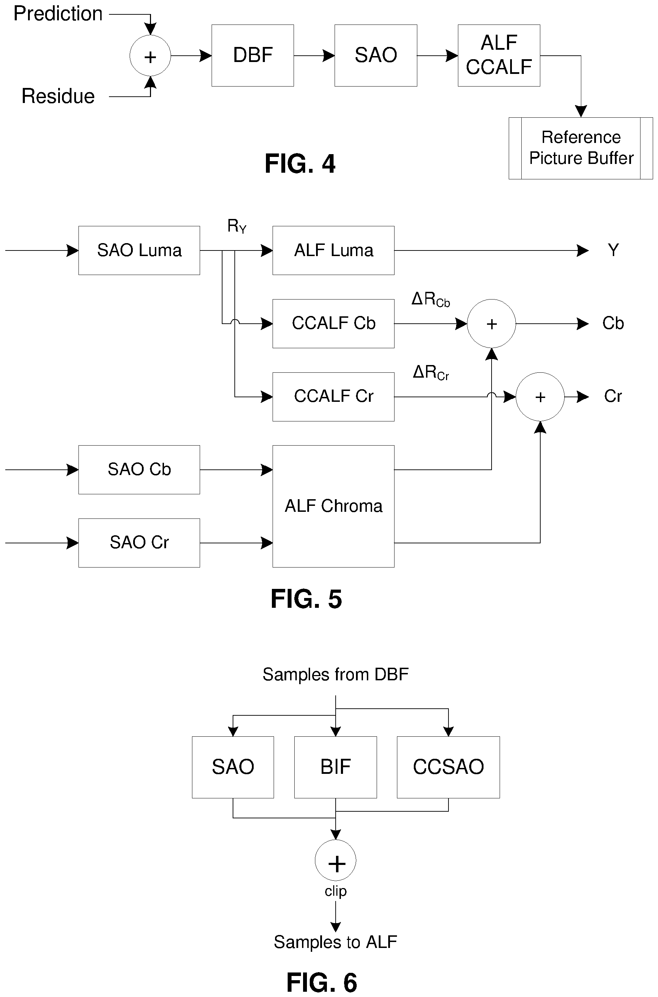

The workflow of VVC in-loop filters is depicted in FIG. 4 (JVET-T2002, Algorithm description for Versatile Video Coding and Test Model 11, J. Chen, Y. Ye, S. Kim, §3.7). If local deblocking conditions are met, Luma and Chroma reconstructed samples located along block boundaries are first filtered with deblocking filters (DBF). Then offsets are added locally depending on a classification based on band-classifier or edge-classifier with Sample-adaptive offset (SAO). Eventually, Adaptive-loop filters (ALF) and its variant Cross-component Adaptive loop filters (CCALF) are run before storing the resulting sample values in the Reference Picture buffer. FIG. 5 details the intricated workflows of ALF and CCALF in VVC. CCALF uses the Luma samples to refine Chroma sample values concurrently with ALF Luma and ALF Chroma.

In-loop filters in ECM

Further loop filters are introduced in Enhanced Compression Model (ECM) software, such as Bilateral filtering (BIF) and Cross-component Sample adaptive offset (CCSAO). Both are carried out in the same loop-filter stage as SAO, and, like SAO, use samples from deblocking as input, as shown in FIG. 6.

Bilateral filter (BIF)

BIF offset is computed based on a 5x5 diamond, using coefficients to be fetched in precomputed look-up table, depending on QP and on the difference between the values of the neighbour sample and of the sample to be filtered. BIF is processed independently and in a similar way on Luma and on Chroma components.

Cross-component sample adaptive offset (CCSAO)

CCSAO is used to refine reconstructed samples. Similarly to SAO, CCSAO classifies the reconstructed samples into different categories, derives one offset for each category and adds the offset to the reconstructed samples in that category. Whereas SAO uses a single component of current sample as input, CCSAO utilizes all three components to classify the current sample into different colour bands.

Joint clipping

SAO, BIF and CCSAO offsets are computed in parallel, added to the reconstructed samples and jointly clipped, before proceeding to ALF, as shown in FIG. 6.

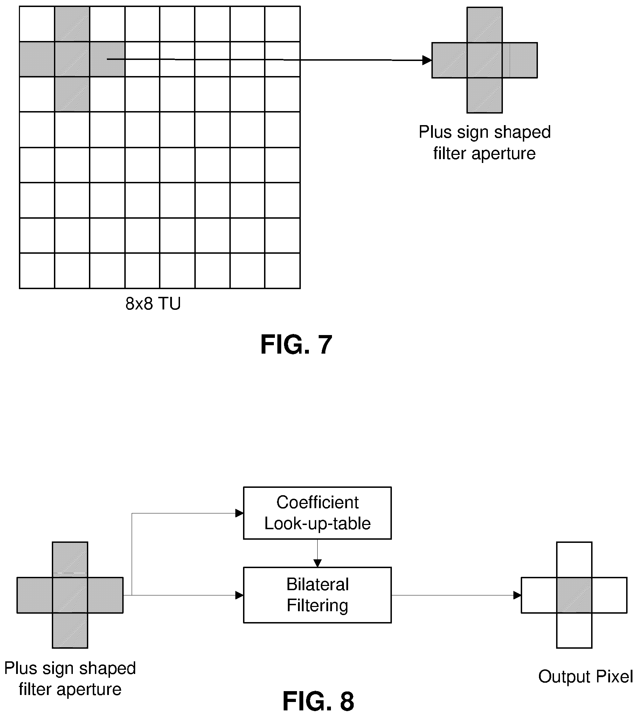

In ECM, BIF is used for improving reconstruction of a current decoded picture which is intended to be output by the decoder for display. The bilateral filter BIF is derived from gaussian filters and can be described as follows. Each sample in the reconstructed picture is replaced by a weighted average of itself and its neighbors. The weights are calculated based on the distance from the center sample as well as the difference in sample values. Because the filter is in the shape of a small plus sign as shown in FIG. 7, all of the distances are 0 or 1.

A sample located at (i, j), is filtered using its neighboring sample (k, 1). The weight $\omega(i, j, k, l)$ is the weight assigned for sample (k, 1) to filter the sample (i, j), and it is defined as:

$$\omega(\text{i, j, k, l}) = e^{\left(-\frac{(i-k)^2 + (j-l)^2}{2\sigma_d^2} - \frac{\|I(i,j) - I(k,l)\|^2}{2\sigma_r^2}\right)} \qquad (Eq.\,1)$$

I(i, j ) and I(k, 1) are the original reconstructed intensity value of samples (i, j) and (k,l) respectively.

$\sigma_d$ is the spatial parameter, and $\sigma_r$ is the range parameter. The property (or strength) of the bilateral filter is controlled by these two parameters. The Bilateral filter can be seen as a combination of two gaussian filters. Samples located closer to the sample to be filtered, and samples having smaller intensity difference to the sample to be filtered, will have larger weight than samples further away and with larger intensity difference.

Depending on implementations, $\sigma_d$ can be based on the transform unit size (TU block width TU block height), and $\sigma_r$ can be based on the QP used for the current block (Eq. 3).

$$\sigma_d = 0.92 - \frac{\min(\text{TU block width, TU block height})}{40} \qquad (Eq.\,2)$$

$$\sigma_r = max(\frac{(QP - 17)}{2}, 0.01) \qquad (Eq.\,3)$$

In these implementations, the bilateral filter is applied to each TU block directly after the inverse transform in both the encoder and the decoder. As a result of this, subsequent Intra-coded blocks will predict from the sample values that have been filtered with the bilateral filter. This also makes it possible to include the bilateral filter operation in the Rate-Distortion decisions in the encoder.

In these implementations, each sample in the transform unit is filtered using its direct neighboring samples only. The filter has a plus sign shaped filter aperture centered at the sample to be filtered.

The output filtered sample value $I_D(i, j)$ is calculated as:

$$I_D(i,j) = \frac{\sum_{k,l} I(k,l) * \omega(i,j,k,l)}{\sum_{k,l} \omega(i,j,k,l)} \qquad (Eq.\,4)$$

For TU sizes larger than 16 × 16, the block is treated as several 16 × 16 blocks using TU block width = TU block height = 16 in Equation 2. Also, rectangular blocks are treated as several instances of square blocks.

In order to reduce the number of calculations, the bilateral filter can be implemented using a look-up-table (LUT) storing all weights for a particular QP in a two-dimensional array (FIG. 8). The LUT uses the intensity difference between the sample to be filtered and the reference sample as the index of the LUT in one dimension, and the TU size as the index in the other dimension. For efficient storage of the LUT, weights are rounded to 8-bit precision.

The goal of the LUT is to pre-calculate the weights of the bilateral filter:

$$\omega(i, j, k, l) = e^{\left(-\frac{(i-k)^2+(j-l)^2}{2\sigma_d^2} - \frac{\|I(i,j)-I(k,l)\|^2}{2\sigma_r^2}\right)}, \qquad (Eq.\,6)$$

so that the filtered pixel $I_F(i, j)$ can be calculated as

$$I_F(i, j) = \frac{\sum_{k,l} I(k, l) * \omega(i, j, k, l)}{\sum_{k,l} \omega(i, j, k, l)}. \qquad (Eq.\,7)$$

For the center weight, i.e., the weight for the center pixel, $k = i$ and $j = l$. Hence $(i - k) = (j - l) = 0$ and $I(i, j) = I(k, l)$ which means that the center weight $\omega(i, j, i, j)$ is always 1.0.

For all other weights, $(i - k)^2 + (j - l)^2 = 1$ since only the 4-neighbors of a pixel are included in the filtering (a "plus-shaped" filter kernel). Therefore

$$\begin{cases} \omega_{center} = 1.0 \\ \omega_{other} = e^{\left(-\frac{1}{2\sigma_d^2} - \frac{\|I-I_c\|^2}{2\sigma_r^2}\right)} \end{cases}$$

where $I_c$ is the intensity of the center pixel. Since the center weight is always 1.0, no LUT is needed for it. For the other weights, it is possible to use a 3D LUT indexed over the following dimensions:

> _Modes:_ The variable $\sigma_d$ can take 6 different values depending upon the TU size and type of block; 3 each for intra blocks ($4\times4$, $8\times8$, and $16\times16$ blocks) and 3 for inter blocks ($4\times4$, $8\times8$, and $16\times16$ blocks). (Rectangular blocks uses the smaller dimension.)
>
> _QPs:_ The variable $\sigma_r$ is calculated from the QP value and the filter is only turned on for QP 18 and higher: For QP 17 and lower $\sigma_r$ becomes too small to change the filtered value. Therefore, this dimension can take 34 different values (18 through 51).
>
> _Absolute intensity difference:_ The value $\|I - I_c\|$ can take 1024 different values for 10-bit luma values.

Each weight is stored using an unsigned short. Thus, a brute force implementation would need 6*34*1024*2 = 417 792 bytes of LUT memory.

In FIG. 2 and FIG. 3, the image, stored in a reference picture buffer (280, 380), denoted regular reference picture, is optimized for the display, for example by applying the loop filters (265, 365). The same image is used for display and for encoding of next frame(s) (270, 275, 375). The optimal frame in the reference picture buffer (280, 380) for display may not necessary be the optimal frame for encoding a next frame. The regular reference picture is optimized for display, but it also used for coding (predicting) subsequent blocks of the current picture (intra prediction) or subsequent blocks of other pictures (inter prediction).

Embodiments described herein provides for improving the reference picture used for encoding subsequent pictures in the video. Such improvement is made separately from the improvement of the reconstruction of the picture for display.

Some embodiments provide for using an alternative version of the reconstructed picture for predicting a subsequent picture in the video. The alternative version of the reconstructed picture is different from the reconstructed picture intended for display and thus is different from the reference picture which is classically derived as the reconstructed picture.

In the present document, the reference picture which is classically derived as the reconstructed picture can be referred to as first reference picture or regular reference picture. While the alternative version of the reconstructed picture that is optimized for prediction of subsequent pictures of the video can be referred to as second reference picture, additional picture, alternative version of the reference picture, or supplemental reference picture.

Some embodiments provide for storing in the reference picture buffer a picture which is different from the displayed picture. This additional picture (for prediction only) may be stored in the DPB. This additional picture can be denoted multi-instance reference picture, or supplemental reference picture. This supplemental reference picture, or a set of supplemental reference pictures, will be used to perform the encoding, not the display. For this reason, this supplemental picture is not sent to the display. This supplemental picture may be a picture obtained at an intermediate stage in the in-loop filters (265, 365). This intermediate stage is not the last filtering (ALF in ECM12). It may be for example the picture after SAO filtering. It may also be a filtered version of the regular reference picture.

In other embodiments, the supplemental reference picture is not stored in the DPB but determined on the fly during decoding of a block of a subsequent picture of the video.

In the following, embodiments are also provided for creating supplemental version(s) of the regular reference picture to be used in the prediction. In some variant, the supplemental reference picture can be a picture extracted at an intermediate stage in the in-loop filtering process. In another variant, the supplemental reference picture can be a filtered version of the regular reference picture buffer. In a further variant, a set of supplemental filtered versions of the regular reference picture are stored in the reference picture buffer. The set of filters are the same or different for each POC A set of supplemental reference pictures can be stored in a specific buffer dedicated to processing, so called processing picture buffer.

The regular reference picture denotes the current picture used as reference and stored in the decoding picture buffer (DPB) as done traditionally. The regular reference picture is displayed (output).The supplemental (additional/alternative) reference picture can be stored in the DPB. This picture is not intended to be displayed but used for coding/decoding (intra/inter prediction) only.

As explained above, the regular reference picture is classically designed to be optimal for display, but it is not the optimal frame for encoding the next frame (270, 275). It is therefore provided a method wherein a supplemental reference picture is used as a reference picture which may be different from the displayed picture. This supplemental reference picture is different from the picture used for display and aims at performing the encoding. This supplemental reference picture may be added in the reference picture buffer in addition to the regular reference picture or may replace the regular reference picture in the reference picture buffer.

If the coding/decoding order number is equal to the picture order number, in an embodiment, the regular reference picture can be replaced by the supplemental reference picture that performs the encoding for the next frame once the reconstructed frame (corresponding to the regular reference picture) has been displayed (output). In this case, the PSNR should be computed before output the picture for display. This configuration corresponds for example to the low delay configuration use case in VVC.

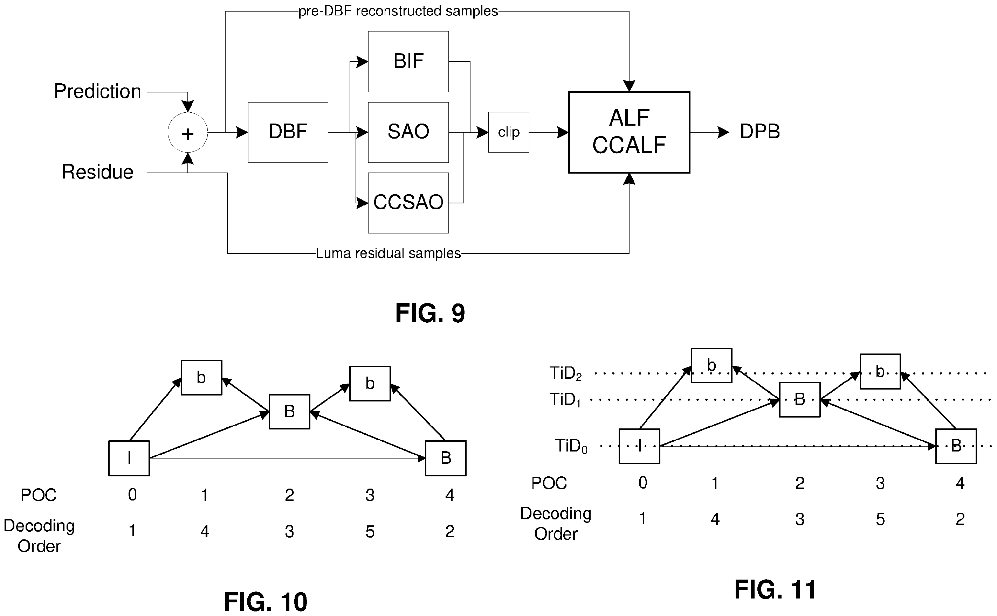

If the coding/decoding order number (DON) is different from the picture order number, the reconstructed frame is not yet output when a next frame is encoded/decoded using the corresponding regular reference picture. In this case, according to an embodiment, a new reference picture is stored for coding only (not for display) and added in the reference picture buffer. An example of Picture Order Count different from decoding order is detailed in FIG. 10.

In this case, the PSNR should be computed on the regular reference picture.

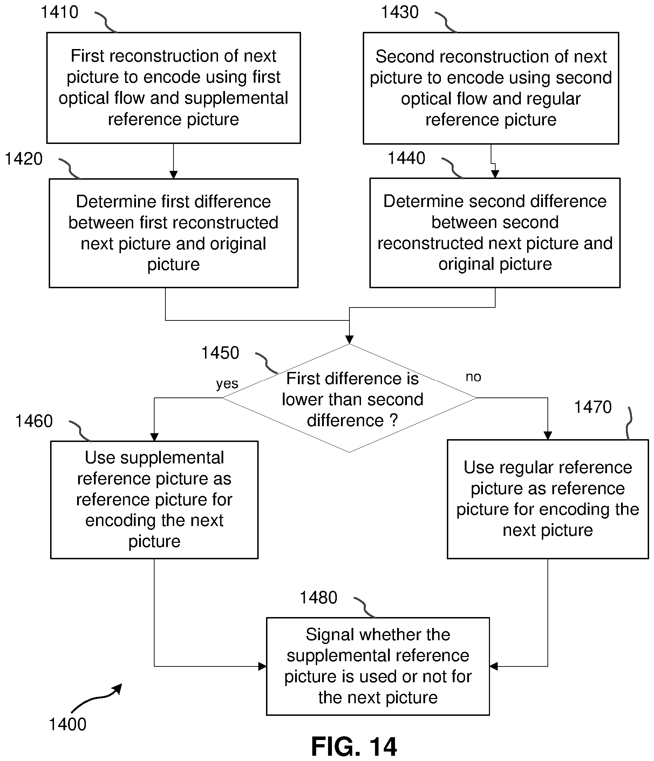

This supplemental reference picture aims at performing the encoding process only. FIG. 14 illustrates an example of a method 1400 for determining if a supplemental reference picture is used at the encoder to perform encoding of at least a next frame of a video, according to an embodiment. In this embodiment, it is considered that a motion field is available between a current picture and a next picture. It is also considered that the current picture is encoded and reconstructed. The regular reference picture corresponds to the reconstructed current picture. A supplemental reference picture is determined from this reconstructed current picture. Embodiments for determining the supplemental reference picture are determined further below.

For example, the motion field between the current picture and the next picture can be obtained using an optical flow method or any other motion field estimation, for example block-based motion. An example of optical flow determination can be found in B. D. Lucas and T. Kanade (1981), "An iterative image registration technique with an application to stereo vision". Proceedings of Imaging Understanding Workshop, pages 121-130.

At 1410, forward and/or backward reconstruction of a next picture to encode is obtained from the supplemental reference picture using an optical flow determined between the supplemental reference picture and the next picture. Given the supplemental reference picture and its optical flow $of1$, the next picture is predicted to encode with motion compensation of the supplemental reference picture in the sequence. At 1420, a difference $d1$ between the next picture to encode and the motion compensated/predicted version is determined.

At 1430, a same process is done to compute another optical flow $of2$ but using the regular reference picture rather than the supplemental reference picture. Given the regular reference picture and its optical flow $of2$, the next picture is predicted using the optical flow $of2$ and the regular reference picture. At 1440, a difference $d2$ between the actual (original) image to encode and the motion compensated/predicted version is determined.

At 1450, the differences $d1$ and $d2$ are compared. If $d1 < d2$ (yes) at 1450, then at 1460, the encoder selects the supplemental reference picture for encoding the next picture. Otherwise (no at 1450), then at 1470, the encoder selects the regular reference picture for encoding the next picture. An example of difference computation for $d1$ and $d2$ can be Root Mean Square measure *(RMS)*. Another example can be a *L1* distance.

At 1480, the encoder signals to the decoder whether the supplemental reference picture is used for encoding the next picture. For example, this signaling can be done by setting a flag in a bitstream with coded data of the next picture or coded data of the current picture.

In a variant, *of2* can be used to generate the next picture to encode at 1410. It means that *of2* is used to compute *d1*.

Embodiments are described below to select/determine the supplemental reference picture.

In an embodiment, the supplemental reference picture is selected from in-loop filtering. The supplemental reference picture can be selected from reconstructed pictures computed during in loop filtering. FIG. 9 illustrates an example of in loop filtering in the ECM 14 implementation.

In a variant, the supplemental reference picture can be selected as the picture output by the Deblocking Filtering DBF). In another variant, the supplemental reference picture can be selected as the output of the SAO filtering.

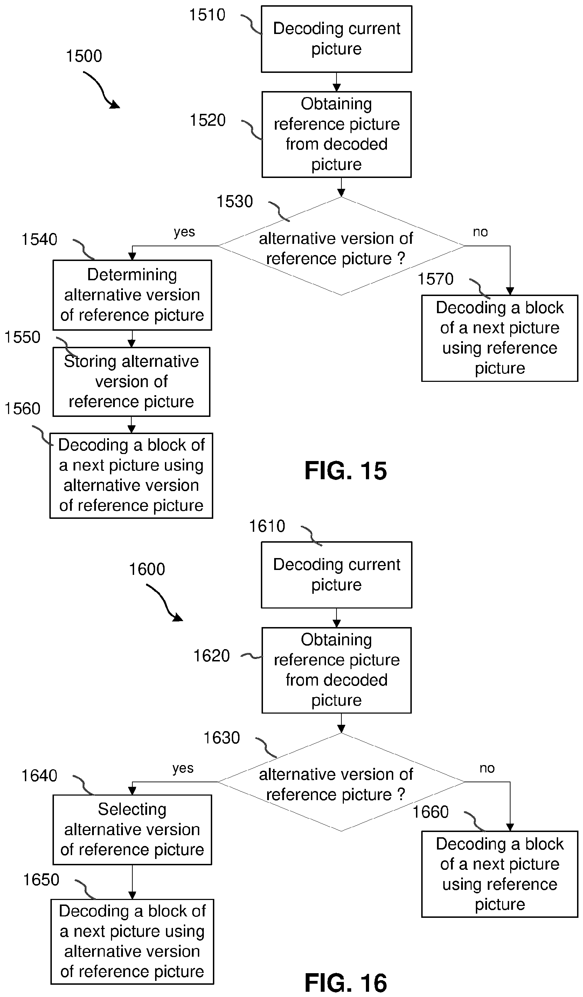

FIG. 16 illustrates an example of a method 1600 for decoding a block of video according to this embodiment. At 1610, a current picture of the video is decoded, and a decoded or reconstructed picture is provided. At 1620, a first reference picture is obtained from the decoded picture, the first reference picture corresponds to the reconstructed picture output by the in-loop filtering process that is intended to be displayed. The first reference picture corresponds to the regular reference picture mentioned above. At 1630, an indication is decoded that indicates whether at least one part of at least one second reference picture has to be determined from the decoded picture. The at least one second reference picture is distinct from the first reference picture and is only intended to be used as reference picture, it is not intended for display. If the indication indicates that a part of the second reference picture has to be determined, then at 1640, a version of the decoded picture at an intermediate stage of the in-loop filtering process is selected as the at least one second reference picture. For example, as mentioned above, the version of the decoded picture at an intermediate stage of the in-loop filtering process can be the output of the DBF or the SAO filtering stages. At 1650, at least one block of a next picture of the video is decoded using the at least one part of the at least one second reference picture. Depending on the variants, all blocks of the next picture can use the second reference picture. In another variants, a signaling indicates which blocks of the next picture uses the second reference picture, other blocks of the next picture can use the regular reference picture or another version of the second reference picture. Otherwise (no at 1630), at 1660, the block of the next picture is decoded using the regular reference picture.

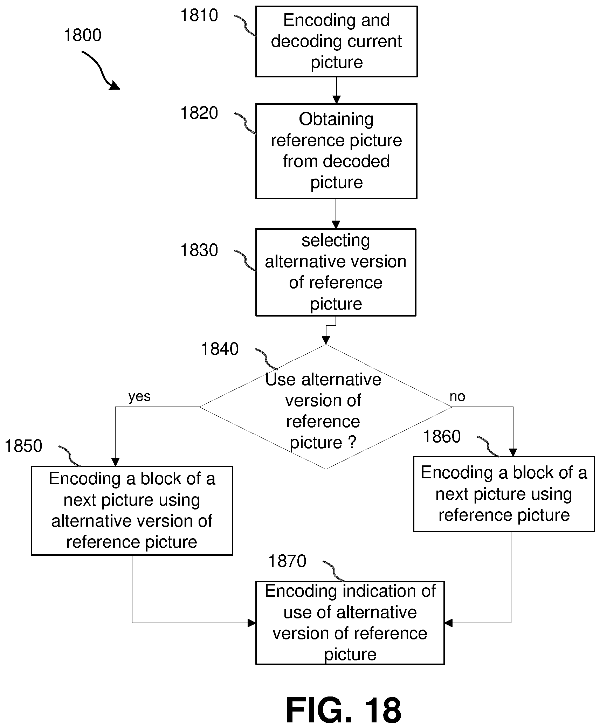

FIG. 18 illustrates an example of a method 1800 for encoding a block of video according to this embodiment. At 1810, a current picture of the video is encoded and decoded and a decoded picture is provided. At 1820, a first reference picture is obtained from the decoded picture, the first reference picture corresponds to the reconstructed picture output by the in-loop filtering process that is intended to be displayed. The first reference picture corresponds to the regular reference picture mentioned above. At 1830, a version of the decoded picture at an intermediate stage of the in-loop filtering process is selected as a second reference picture. For example, as mentioned above, the version of the decoded picture at an intermediate stage of the in-loop filtering process can be the output of the DBF or the SAO filtering stages. The same version is used at encoder and the decoder. At 1840, it is determined whether or not an alternative version of the first reference picture is used for encoding at least one part of a next picture of the video. In other words, it is determined whether or not the selected second reference picture is to be used as a reference picture for encoding at least one block of the next picture. For example, this determination can be done in a similar manner as described with FIG. 14.

In another variant, the determination can be done block-by-block based on a distortion cost determined for the block. In this variant, the use of an alternative version of the first reference picture is signaled at a block level. For a block of the next picture, if it is determined that the alternative version of the reference picture is used (yes at 1840), then at 1850, the block of the next picture is encoded using the alternative version of the reference picture (selected second reference picture), otherwise (no at 1840) at 1860, the block of the next picture is encoded using the first reference picture. At 1870, an indication is encoded that indicates the use or not of the alternative version of the first reference picture at block or picture level.

In another embodiment, the supplemental reference picture is a filtered version of the regular reference picture. This supplemental reference picture may be added in the reference picture in buffer or may replace the corresponding regular reference picture in the reference picture buffer. In a variant, the regular reference picture is filtered using Gaussian-based filtering by applying one or more Gaussian filters to the regular reference picture. In another variant, the filtering of the regular reference picture is a filtering using oriented filters, such as ALF filtering.

For example, in the following, embodiments are described using BIF to filter the regular reference picture. BIF is further detailed below and embodiments to determine and select the filtered picture to store is described further below.

Bilateral filtering (BIF) adopts a low pass Gaussian filter for both the domain/spatial filter and the range filter. The domain low pass Gaussian filter gives higher weights to pixels that are spatially close to the center pixel while the range low pass Gaussian filter gives higher weights to pixels that are similar to the center pixel. Combining the range filter and the domain filter, a bilateral filter at an edge pixel becomes an elongated Gaussian filter that is oriented along the edge, which ensures that averaging is done mostly along the edge and is greatly reduced in the gradient direction. For this reason, the bilateral filter can smooth the noise while preserving the edge structures. BIF, as a set of two gaussian filters can be written as following *(Eq.1)*:

$$\hat{I}[x,y] = \frac{\sum_{(i,j)\in\Omega(x,y)} I[i,j]w[i,j]}{\sum_{(i,j)\in\Omega(x,y)} w[i,j]} \qquad (Eq.1)$$

Where $\hat{I}[x, y]$ is the filtered image at (x,y), w[i, j] is the coefficients of the bilateral filter and I [i, j] is the reconstructed pixels in a window $\Omega$(x,y) centered at (x,y).

Where :

$$w[i,j] = e^{\left(-\frac{(i-x)^2 + (j-y)^2}{2\sigma_d^2} - \frac{\|I(i,j) - I(x,y)\|^2}{2\sigma_r^2}\right)} \qquad (Eq.2)$$

Where $\Omega$(x,y) is a pixel window centered at (x,y), $\Omega$(x,y) may be equal to [x - $3\sigma_d$, x + $3\sigma_d$; y - $3\sigma_d$, y + $3\sigma_d$]. Other more truncated windows of $\Omega$(x,y) are possible, such as to [x - $\sigma_d$, x + $\sigma_d$;y - $\sigma_d$, y + $\sigma_d$] or [x - $2\sigma_d$, x + $2\sigma_d$; y - $2\sigma_d$, y + $2\sigma_d$].

The filter parameters $\sigma_d$ and $\sigma_r$ correspond respectively to the spatial filter variance and range filter variance. For example, $\sigma_d$ (spatial filter variance) can be set to a value to 3 or 5 to limit the distortion from the neighbor pixels. For example, $\sigma_r$ (range filter variance) can be a value selected between 3 and 33.

In a variant, the Bilateral Filtering can be an adaptive Bilateral filtering. The weights in *Eq.1* can be rewritten as:

$$w[i,j] = e^{\left(-\frac{(i-x)^2 + (j-y)^2}{2\sigma_d^2} - \frac{\|I(i,j) - G(x,y)\|^2}{2\sigma_r^2}\right)}$$

Where $\Omega$(x,y) is a pixel window centered at (x,y), $\Omega$(x,y) may be equal to [x - $3\sigma_d$, x + $3\sigma_d$; y - $3\sigma_d$, y + $3\sigma_d$]. Other more truncated windows of $\Omega$(x,y) are possible, such as to [x - $\sigma_d$, x + $\sigma_d$; y - $\sigma_d$, y + $\sigma_d$] or [x - $2\sigma_d$, x + $2\sigma_d$; y - $2\sigma_d$, y + $2\sigma_d$].

Where G(x, y) is a low pass filter guidance. The gaussian spatial kernel ($\sigma_d$) on *I* coupled with gaussian range kernel ($\sigma_r$) from the guidance *G* preserves in a better way the edges and the contours. For example, $\sigma_d$ can be set to 3 or 5 to limit the distortion from the neighbor pixels and for example, $\sigma_r$ can be set between to 3 and 33.

In other example, the low pass filter guidance can be a Difference of Gaussian, or Laplacian of Gaussian.

By tuning both gaussian (range and spatial) filter kernel, and by filtering all pixels, the bilateral filtering tackles the noise removal while preserving the edge for all pixels.

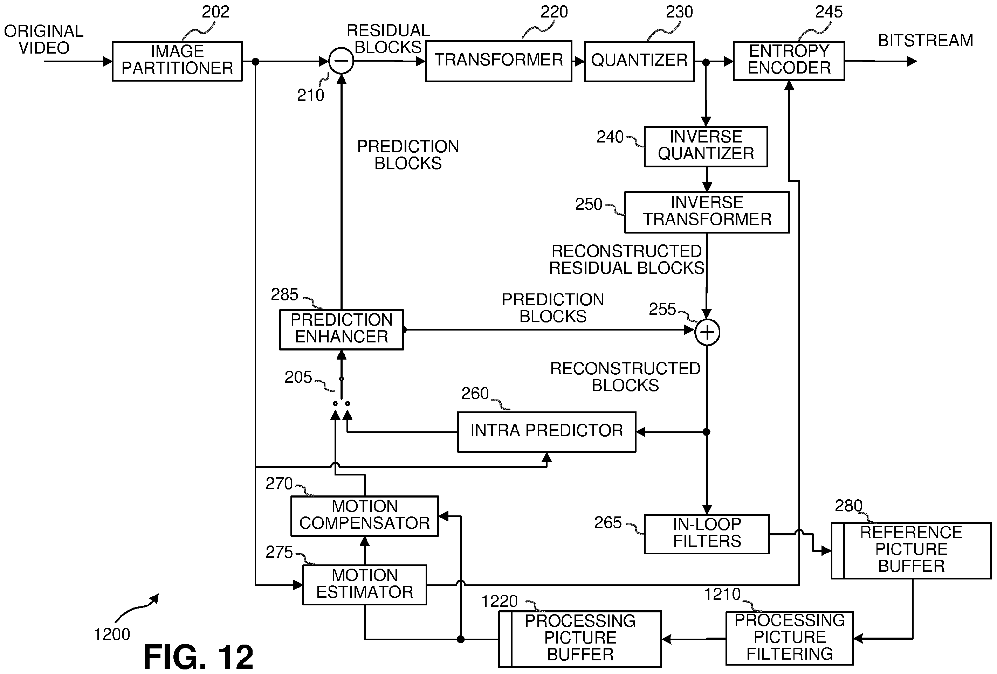

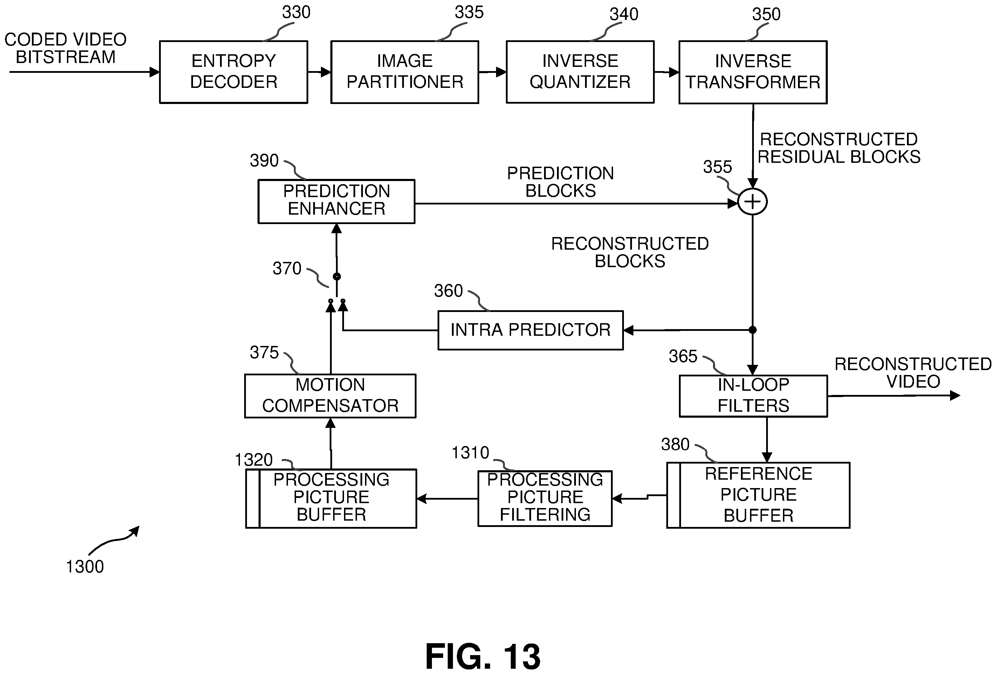

FIG. 15 illustrates an example of a method 1500 for decoding a block of video according to this embodiment. At 1510, a current picture of the video is decoded, and a decoded or reconstructed picture is provided. At 1520, a first reference picture is obtained from the decoded picture, the first reference picture corresponds to the reconstructed picture output by the in-loop filtering process that is intended to be displayed. The first reference picture corresponds to the regular reference picture mentioned above. At 1530, it is determined whether an alternative version of the reference picture is used for decoding at least one part of a next picture. For example, this can be determined by decoding an indication that indicates whether at least one part of at least one second reference picture has to be determined from the decoded picture. The at least one second reference picture is distinct from the first reference picture and is only intended to be used as reference picture, it is not intended for display. If the indication indicates that a part of the second reference picture has to be determined, then at 1540, the at least one part of the second reference picture is determined by filtering the decoded picture. For example, the at least one part of the second reference picture is determined from the decoded picture using a Bilateral filtering as described above. At 1550, the at least one part of the second reference picture determined at 1540 is stored in picture buffer. The picture buffer can be the same as the decoded picture buffer that stores the regular reference picture or a specific picture buffer as is described further below with FIG. 12 and 13.

At 1560, at least one block of a next picture of the video is decoded using the at least one part of the at least one second reference picture. Depending on the variants, all blocks of the next picture can use the second reference picture. In another variant, a signaling indicates which blocks of the next picture uses the second reference picture, other blocks of the next picture can use the regular reference picture or another version of the second reference picture.

Otherwise (no at 1530), at 1570, the block of the next picture is decoded using the regular reference picture.

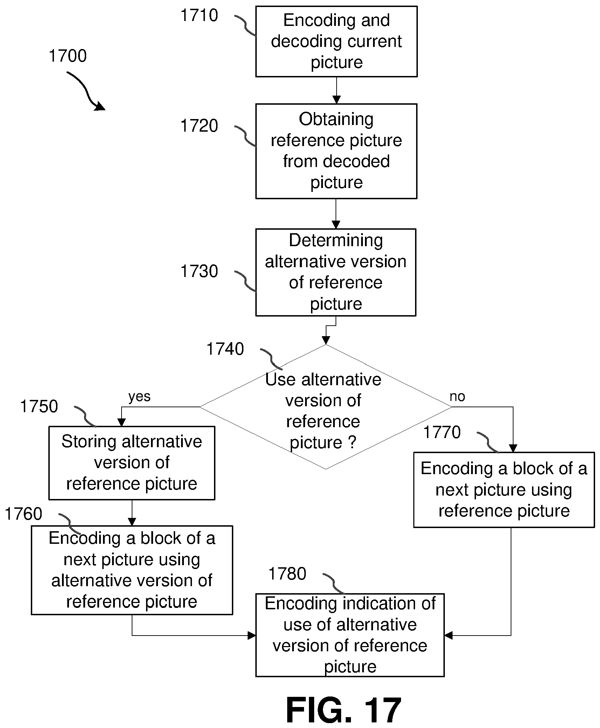

FIG. 17 illustrates an example of a method 1700 for encoding a block of video according to this embodiment. At 1710, a current picture of the video is encoded and decoded and a decoded picture is provided. At 1720, a first reference picture is obtained from the decoded picture, the first reference picture corresponds to the reconstructed picture output by the in-loop filtering process that is intended to be displayed. The first reference picture corresponds to the regular reference picture mentioned above. At 1730, an alternative version of the regular reference picture is determined. In this variant, the alternative version of the regular reference picture is a filtered version of the regular reference picture, for example using a Bilateral filtering as described above. The alternative version of the regular reference picture is distinct from the regular reference picture. The same version is used at encoder and the decoder. At 1740, it is determined whether the alternative version of the regular reference picture is used for encoding at least one part of a next picture of the video. For example, this determination can be done in a similar manner as described with FIG. 14. In another variant, the determination can be done block-by-block based on a distortion cost determined for the block. In this variant, the use of an alternative version of the regular reference picture is signaled at a block level. For a block of the next picture, if it is determined that the alternative version of the reference picture is used (yes at 1740), then at 1750, the filtered version of the regular reference picture is stored in a picture buffer and at 1760 the block of the next picture is encoded using this alternative version of the reference picture. Otherwise (no at 1740) at 1770, the block of the next picture is encoded using the regular reference picture. At 1780, an indication is encoded that indicates the use or not of the alternative version of the regular reference picture at block or picture level.

In the embodiments described in relation with FIG.15-18, in another variant, determining whether to use an alternative version of the regular reference picture (1530, 1630, 1740, 1840) can be based for example on a temporal level of the current picture or the next picture. For example, the alternative version of the regular reference picture is used for picture of a same temporal level, and/or if the current picture has a temporal level 0. In another variant, the alternative version of the regular reference picture is used for picture of a given type P or B. In another variant, the alternative version of the regular reference picture is used when the prediction structure is low delay. In another variant, the alternative version of the regular reference picture is used when a temporal distance between the current picture and the next picture is below a given value.

In the examples of the embodiment described with FIG. 15 and 17, the alternative version of the regular reference picture is obtained using Bilateral filtering. However, BIF can be used with different filter parameters, such as the spatial filter variance, range filter variance and low-pass filter guidance. Determining an optimal BIF for obtaining the alternative version of the regular reference picture can be done as follows. A set of filtered pictures can be generated by filtering the regular reference picture with BIF or adaptive BIF using different values of $\sigma_d$ and $\sigma_r$.

Then, the optical flow method described with FIG. 14 can be applied to select the filtered picture among the set of filtered picture that best predict the next picture. alternative version to store in the reference picture buffer is the selected filtered picture that minimizes the distance *d1*. When the selected filtered picture is found, the corresponding filter parameters that provided the selected filtered picture ($\sigma_d$ and $\sigma_r$) are signaled to the decoder. For example, the filter parameters can be signaled in the picture header of the current picture or of the next picture for which the selected filtered picture has been selected. The filter parameters can be signaled as an index indicating a table of filter parameters when the BIF coefficients are pre-calculated in a LUT as described further above.

In a variant, the best filter parameters can be determined per slice, Coding Unit or Transform Unit, block of the next picture and signaled accordingly in a slice header or an application parameter set referenced in the slice header.

In other variants of the embodiment described with FIG. 15 and 17, the alternative version of the regular reference picture can be obtained by a filtering of the regular reference picture using oriented filters, such as ALF filtering. For example, Wiener based filters can be determined in a similar manner as ALF filters parameters determined for the reconstructed picture in the VVC, but optimizing the distortion between a current picture and a prediction of the current picture obtained from the filtered regular reference picture and a motion field between the regular reference picture and the current picture that uses this regular reference picture. Motion field can be for example the optical flow as explained above with FIG. 14. As ALF uses classification of the pixels to determine oriented filters, in this variant, the same classification used for the regular reference picture can be used to determine the filter for filtering the regular reference picture. In this variant, the ALF parameters are determined for filtering the regular reference picture in view of improving the prediction of the current picture to encode. While in VVC, ALF filters are used for improving the reconstructed version of the current picture for display. Optimized filter parameters are thus sent to the decoder.

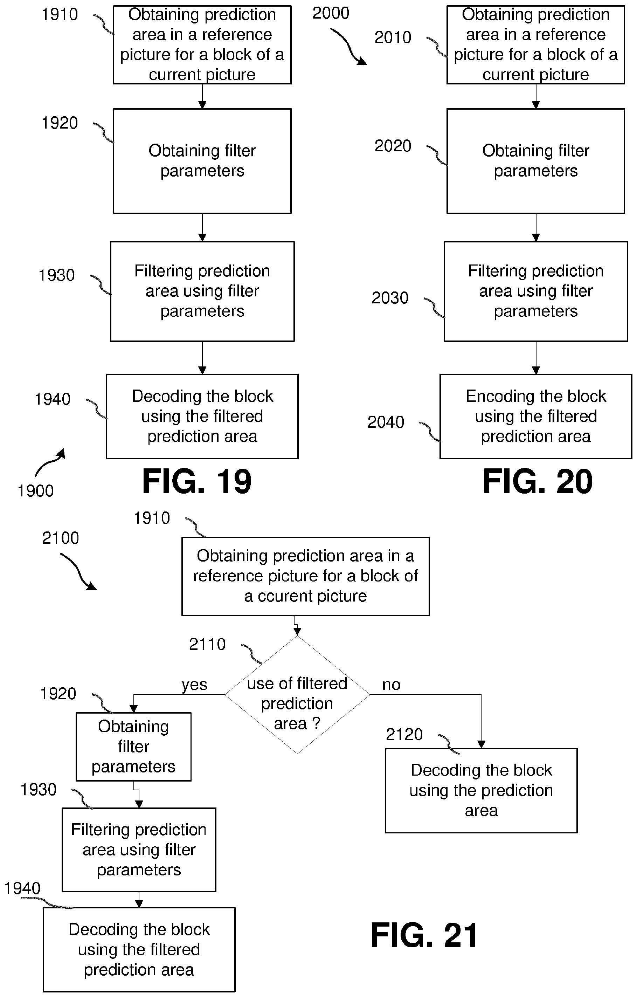

In an embodiment described below in relation with FIG. 19-22, the determination of the alternative version of the regular reference picture and whether it is used or not can be done on the fly when encoding or decoding a block of a current picture to encode/decode. In this embodiment, the regular reference picture is already stored in the decoded picture buffer and corresponds to a previously reconstructed picture of the video. In a variant of this embodiment, it is considered that the alternative version of the regular reference picture is obtained using a BIF as described above. In another variant, other type of filtering can be used, such as oriented filters. Therefore, in the following, the term "filter" can refer to a gaussian filter, or a combination of gaussian filter (Bilateral filter, BIF) or wiener filter from ALF.

FIG. 19 illustrates an example of a method 1900 for decoding a block of a current picture of video according to this embodiment. At 1910, for a block of the current picture of the video, a prediction area in the reference picture stored in the decoded picture buffer (regular reference picture) is obtained. For example, the prediction area is obtained by motion compensation of the block using motion vector decoded for the block. At 1920, filter parameters of the filter are obtained for the block. The filter parameters can be set separately for each block of the current picture or be the same for all blocks of the current picture. At 1930, the prediction area is filtered with the filter using the filter parameters and a filtered prediction area is provided. At 1940, the block is decoded using the filtered prediction area.

FIG. 20 illustrates an example of a method 2000 for encoding a block of a current picture of a video according to the variant of this embodiment described with FIG. 19. At 2010, for a block of the current picture of the video, a prediction area in the reference picture stored in the decoded picture buffer (regular reference picture) is obtained. For example, the prediction area is obtained by motion compensation of the block using motion vector determined for the block. At 2020, filter parameters of the filter are obtained for the block. The filter parameters can be set separately for each block of the current picture or be the same for all blocks of the current picture. At 2030, the prediction area is filtered with the filter using the filter parameters and a filtered prediction area is provided. At 2040, the block is encoded using the filtered prediction area.

FIG. 21 illustrates an example of a method 2100 for decoding a block of a video according to another embodiment. In this embodiment, an additional step (2110) checks for the block whether the filtered prediction area is used for decoding the block or not. For example, an indication is decoded from the bitstream at the block level. Then, at 2120, if the filtered prediction area is not used, the block is decoded using the prediction area obtained at 1910. Remaining steps of FIG. 21 are like the corresponding ones of FIG. 19.

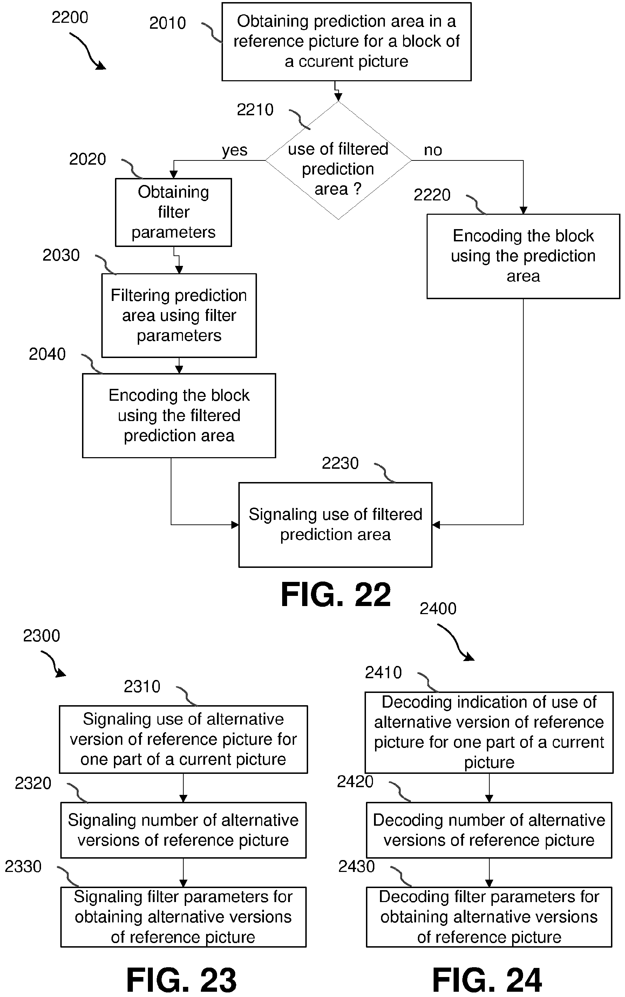

FIG. 22 illustrates an example of a method 2200 for encoding a block of a video according to this other embodiment. In this embodiment, an additional step (2210) checks for the block whether the filtered prediction area is used for encoding the block or not. For example, this can be determined based on a distortion cost determined for the block. It is determined whether block is best predicted using the filtered prediction area or the non-filtered prediction area (obtained at 2010). If no at 2210, then at 2220, the block is encoded using the non-filtered prediction area. At 2230, an indication is encoded in the bitstream at the block level to indicate whether the filtered prediction area is used for the block or not. Remaining steps of FIG. 22 are like the corresponding ones of FIG. 20.

In FIG 19-22, the reference picture from which the prediction area is obtained can be one of a selected version of a previously decoded picture at an intermediate stage of an in-loop filtering process or a previously reconstructed picture output by the in-loop filtering process.

In another variant of the embodiments described with FIG. 15, 17 or 19-22, the filtered reference picture or filtered prediction area is selected among a set of filtered reference pictures. In this variant, the regular reference picture is filtered with different filters. The filtered reference pictures can be added in the reference picture buffer or may replace the regular reference picture in the reference picture puffer.

In this variant, a set of filtered regular reference pictures is generated by filtering the regular reference picture with different sets of parameters of the filter. For example, the set of filtered regular reference pictures is generated by filtering the regular reference picture with BIF or adaptive BIF with different values of filter parameters $\sigma_d$ and $\sigma_r$.

Then, the method described in relation with FIG. 14 can be applied. The $N$ filtered regular reference pictures that minimize the distance $d1$ ($N$ smallest $d1$) are selected as alternative versions of the regular reference picture and added in the reference picture buffer. The corresponding filter parameters (for example $\sigma_d$ and $\sigma_r$ in case of BIF) are signaled to the decoder. For example, the filter parameters can be signaled in the picture header.

During the encoding process, the encoder selects the best alternative version of the regular reference picture from the $N$ selected filtered regular reference pictures.

In this embodiment, when using BIF, the same range for $\sigma_d$ and $\sigma_r$ as for the previous embodiments are selected, as well as the same guided filter in case of adaptive filtering.

In a variant, the best filter parameters are selected per block of the picture to encode.

The selected filter parameters used for each block predicted using an alternative version of the regular reference picture can be signaled per slice, Coding Unit or Transform Unit. For example, the filter parameters can be signaled in the slice header.

In a variant, during the encoding process, the encoder selects the best blocks from the N selected filtered regular reference pictures. These filtered blocks will be used during the encoding for these blocks.

In another variant of FIG. 17, 20 or 22, distinct filter parameters can be available for the filter. In this variant, at 2020 or 1730, a plurality of filter parameters for the filter is obtained using the distinct filter parameters that are available and at 2030 or 1740, the prediction area is filtered with the plurality of corresponding filter providing a plurality of filtered prediction areas. Then, for each filtered prediction area, a distortion cost is determined between the filtered prediction area and a corresponding area in the image and the filtered prediction area that provides the lowest distortion cost is selected. For example, the filtered prediction area that best predicts the block of the current picture is selected. At 2040 or 1760, the block is encoded using the selected filtered prediction area and the filter parameters that provided the selected filtered prediction area are signaled.

FIG. 23 illustrates an example of a method 2300 for signaling filter parameters used in one of the methods described above, according to an embodiment. The data signaled herein can be signaled in association with the coded data of the regular reference picture or with the coded data of the current picture. When signaled in association with the coded data of the regular reference picture, the same filter signaling can be applied to any picture that uses this regular reference picture or the filter signaling can be associated with an indication of the subsequent picture to which it is applied. At 2310, it is signaled whether an alternative version of the regular reference picture is used for decoding a current picture. This signaling can be done in picture header or slice header for example.

In a variant, at 2320, when several alternative versions of the regular reference picture can be used, an indication of a number of these several alternative versions is signaled. At 2330, the filter parameters for obtaining each of the alternative versions of the reference picture are signaled.

The filter parameters can be signaled by an indication of the spatial filter variance and an indication of the range filter variance. In this variant, the filter weights are then calculated from these filter parameters at the decoder.

In another variant, the filter parameters can be signaled by an index indicated a pre-calculated LUT storing the weights of the filter.

FIG. 24 illustrates an example of a method 2400 for decoding filter parameters used in one of the methods described herein, according to the embodiment described with FIG. 23. At 2410, an indication is decoded indicating whether an alternative version of the regular reference picture is used for decoding a current picture. In a variant, at 2420, a number of alternative versions of the regular reference picture that can be used is decoded. At 2430, the filter parameters for obtaining each of the alternative versions of the reference picture are decoded. The filter parameters can be signaled by an indication of the spatial filter variance and an indication of the range filter variance. In this variant, the filter weights are then calculated from these filter parameters at the decoder.

In another variant, the filter parameters can be signaled by an index indicated a pre-calculated LUT storing the weights of the filter.

In another variant of the methods described with FIG 15, 17, 19-22, when using BIF, the filter parameters can be determined without signaling.

In this variant, different ranges for BIF parameters $\sigma_d$ and $\sigma_r$ are selected for different Picture Order Count. And different guided filter can be selected in case of adaptive filtering for different POC. The ranges for $\sigma_d$ and $\sigma_r$ can be different regarding the temporal level of the reference picture or of the temporal level of the current picture ($\text{TiD}_i$ in FIG. 11); FIG. 11 illustrates an example of POC and Decoding order regarding temporal level (TiD). For example, $\sigma_d$ can be set to 3 for $\text{TiD}_0$ and TiDi, and $\sigma_d$ can be set to 5 for $\text{TiD}_2$. For example, $\sigma_r$ can be set between to 3 and 13 for $\text{TiD}_0$ and $\text{TiD}_1$, and $\sigma_r$ can be set between to 13 and 33 for $\text{TiD}_2$.

For example, in case of adaptive BIF, guided filter can be a gaussian for $\text{TiD}_0$ Difference of Gaussian for TiDi and Laplacian of Gaussian $\text{TiD}_2$.

In this variant, the filter parameters can thus depend on the temporal level of the picture. In another variant, the filter parameters can depend on a temporal distance between the picture and the reference picture. In these variants, there is no need to signal the BIF parameters used for a current picture.

When the filter parameters of the Bilateral filter are determined per block of a picture to encode/decode, the filter parameters of the BIF can be set for a block based on a size of the block or based on a quantization parameter used for encoding the block. Also, the above variants based on the temporal level or temporal distance can be also used.

In another embodiment, the alternative version(s) of the regular reference picture can be stored in a processing picture buffer distinct from the decoded picture buffer that stores the regular reference picture.

In this embodiment, a specific buffer dedicated to processing is created. FIG. 12 and 13 respectively provides an example of an encoder (1200) and a decoder (1300) having this specific buffer (1220, 1320) The alternative version(s) of the regular reference picture are stored in this processing picture buffer (1220, 1320) and are intended to be used as a reference picture for prediction during the encoding/the prediction. For example, the regular reference picture from the reference picture buffer (280, 380) is processed by a processing picture filtering (1210, 1310) according to the embodiments described above. In this example, the processing picture filtering is BIF or adaptive BIF or another filter.

For example, the Processing Picture Buffer (1220, 1320) can be populated by a picture or a set of pictures. The Processing Picture Buffer comprises a filtered version of regular reference picture or can be a picture from in-loop filtering (e.g. output of SAO).

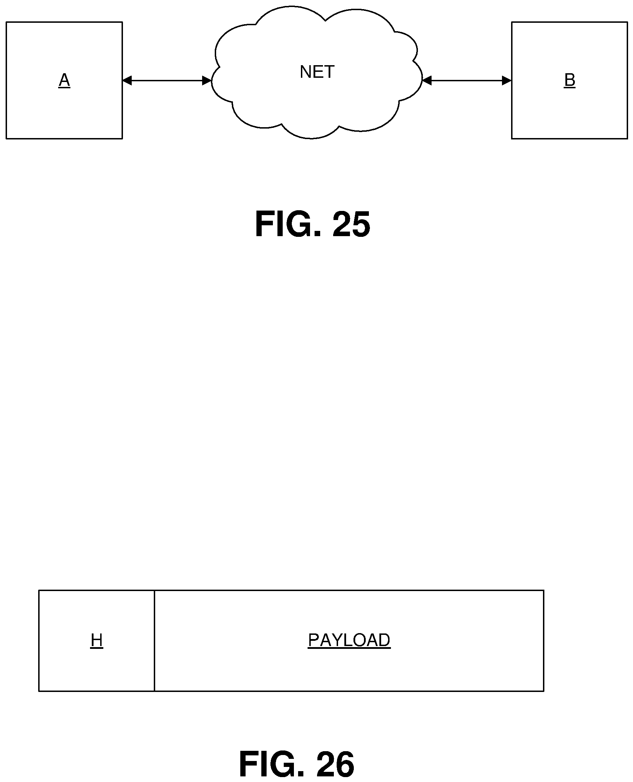

In an embodiment, illustrated in FIG. 25, in a transmission context between two remote devices A and B over a communication network NET, the device A comprises a processor in relation with memory RAM and ROM which are configured to implement a method for encoding a video according to any one of the embodiments described herein and the device B comprises a processor in relation with memory RAM and ROM which are configured to implement a method for decoding a video according to any one of the embodiments described herein. In accordance with an example, the network is a broadcast network, adapted to broadcast/transmit a coded video from device A to decoding devices including the device B.

FIG. 26 shows an example of the syntax of a signal transmitted over a packet-based transmission protocol. Each transmitted packet P comprises a header H and a payload PAYLOAD. In some embodiments, the payload PAYLOAD may comprise data representative of a video encoded according to any one of the embodiments described above. The payload can also comprise any signaling as described above. For example, the payload comprises the indication signaled according to one of the embodiments described in relation with FIG 15-24.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. A bitstream that includes one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:

   decoding a current picture of a video providing a decoded picture,
   obtaining a first reference picture from the decoded picture, the first reference picture being a reconstructed picture output by an in-loop filtering process,
   decoding an indication indicating that at least one part of at least one second reference picture has to be determined from the decoded picture, the at least one second reference picture being distinct from the first reference picture,
   determining at least one part of the at least one second reference picture using a filtering of the decoded picture,
   decoding at least one block of a next picture of the video using the at least one part of the at least one second reference picture.

2. The method of claim 1, wherein determining the at least one part of the at least one second reference picture using the filtering of the decoded picture comprises at least one of :

   - filtering a selected version of the decoded picture at an intermediate stage of the in-loop filtering process, or
   - filtering the first reference picture.

3. The method of claim 1 or 2, wherein the filtering is a gaussian-based filtering.

4. The method of claim 3, wherein parameters of the filtering comprise at least one of a spatial filter variance, a range filter variance or a type of guided filter.

5. The method of claim 3 or 4, wherein parameters of the filtering depend on a temporal level of the current picture.

6. The method of any one of claims 1-2, wherein a plurality of second reference pictures is determined using filtering with distinct parameters.

7. The method of claim 6, comprising decoding an indication of a number of second reference pictures of the plurality of second reference pictures.

8. The method of claim 4, 6 or 7, comprising decoding one or more syntax elements providing for determining the parameters of the filtering.

9. The method of any one of claims 6-8, wherein the at least one block of the next picture is decoded using at least one part of one of the second reference pictures of the plurality of second reference pictures, the method comprises decoding at least one other block of the next picture using at least one part of another one of the second reference pictures of the plurality of second reference pictures or at least one part of the first reference picture.

10. The method of any one of claims 1-9, wherein the at least one second reference picture is stored in a decoded picture buffer in addition or in replacement to the first reference picture.

11. The method of any one of claims 1-9, wherein the at least one second reference picture is stored in a processing picture buffer distinct from a decoded picture buffer that stores reconstructed pictures output by the in-loop filtering process and intended for display.

12. The method of claim 11, comprising storing the first reference picture in the decoded picture buffer.

13. A method comprising:

    encoding and decoding a current picture of a video providing a decoded picture,
    obtaining a first reference picture from the decoded picture, the first reference picture being a reconstructed picture output by an in-loop filtering process,
    determining at least one part of at least one second reference picture from the decoded picture using a filtering of the decoded picture, the at least one second reference picture being distinct from the first reference picture,
    determining whether the at least one second reference picture is to be used as a reference picture for encoding at least one block of a next picture of the video,
    responsive to the determination that the at least one second reference picture is to be used as a reference picture for encoding at least one block of a next picture, encoding an indication indicating that at least one part of the at least one second reference picture has to be determined from the decoded picture at a decoder,
    encoding the at least one block of the next picture using the at least one part of the at least one second reference picture.

14. The method of claim 13, wherein determining whether the at least one second reference picture is to be used as a reference picture for encoding at least one block of a next picture of the video comprises:

    determining a first difference measure between the next picture and a prediction of the next picture obtained using the first reference picture and first motion data between the current picture and the next picture,
    determining a second difference measure between the next picture and a prediction of the next picture obtained using the at least one second reference picture and second motion data between the current picture and the next picture,
    if the second difference measure is lower than the first difference measure, it is determined that the at least one second reference picture is to be used as a reference picture for encoding at least one block of a next picture of the video.

15. An apparatus comprising one or more processors configured to implement the method of any one of claims 1-14.

FIG. 1

105 — RF, COMP, USB, HDMI
110 — PROCESSOR
115
120 — MEMORY
130 — ENCODER/DECODER
140 — STORAGE DEVICE
150 — COMMUNICATION INTERFACE
160 — DISPLAY INTERFACE
165 — DISPLAY DEVICE
170 — AUDIO INTERFACE
175 — AUDIO DEVICE
180 — PERIPHERAL INTERFACE
185 — PERIPHERALS
190 — COMMUNICATION CHANNEL
100

FIG. 2

FIG. 3

**FIG. 4**

**FIG. 5**

**FIG. 6**

Plus sign shaped
filter aperture

8x8 TU

## FIG. 7

Plus sign shaped
filter aperture

Coefficient
Look-up-table

Bilateral
Filtering

Output Pixel

## FIG. 8

**FIG. 9**

**FIG. 10**

**FIG. 11**

EP 4 779 977 A1

FIG. 12

1200

ORIGINAL VIDEO → IMAGE PARTITIONER (202) → TRANSFORMER (220) → QUANTIZER (230) → ENTROPY ENCODER (245) → BITSTREAM

RESIDUAL BLOCKS

QUANTIZER (230) → INVERSE QUANTIZER (240) → INVERSE TRANSFORMER (250)

RECONSTRUCTED RESIDUAL BLOCKS

210 (−)

PREDICTION BLOCKS

255 (+)

PREDICTION BLOCKS

RECONSTRUCTED BLOCKS

PREDICTION ENHANCER (285)

205

INTRA PREDICTOR (260)

IN-LOOP FILTERS (265)

MOTION COMPENSATOR (270)

MOTION ESTIMATOR (275)

REFERENCE PICTURE BUFFER (280)

PROCESSING PICTURE FILTERING (1210)

PROCESSING PICTURE BUFFER (1220)

FIG. 13

1410

First reconstruction of next
picture to encode using first
optical flow and supplemental
reference picture

1430

Second reconstruction of next
picture to encode using second
optical flow and regular
reference picture

1420

Determine first difference
between first reconstructed
next picture and original
picture

1440

Determine second difference
between second
reconstructed next picture and
original picture

1450

yes — First difference is
lower than second
difference ? — no

1460

Use supplemental
reference picture as
reference picture for
encoding the next
picture

1470

Use regular reference
picture as reference
picture for encoding the
next picture

1480

Signal whether the
supplemental reference
picture is used or not for
the next picture

1400

**FIG. 14**

1500

1510 → Decoding current picture

1520 → Obtaining reference picture from decoded picture

1530 → alternative version of reference picture ?

yes → 1540 → Determining alternative version of reference picture

1550 → Storing alternative version of reference picture

1560 → Decoding a block of a next picture using alternative version of reference picture

no → 1570 → Decoding a block of a next picture using reference picture

**FIG. 15**

1600

1610 → Decoding current picture

1620 → Obtaining reference picture from decoded picture

1630 → alternative version of reference picture ?

yes → 1640 → Selecting alternative version of reference picture

1650 → Decoding a block of a next picture using alternative version of reference picture

no → 1660 → Decoding a block of a next picture using reference picture

**FIG. 16**

FIG. 17

1800

1810 — Encoding and decoding current picture

1820 — Obtaining reference picture from decoded picture

1830 — selecting alternative version of reference picture

1840 — Use alternative version of reference picture ?

yes

no

1850 — Encoding a block of a next picture using alternative version of reference picture

1860 — Encoding a block of a next picture using reference picture

1870 — Encoding indication of use of alternative version of reference picture

# FIG. 18

**FIG. 19**

1910 — Obtaining prediction area in a reference picture for a block of a current picture

1920 — Obtaining filter parameters

1930 — Filtering prediction area using filter parameters

1940 — Decoding the block using the filtered prediction area

1900

**FIG. 20**

2000

2010 — Obtaining prediction area in a reference picture for a block of a current picture

2020 — Obtaining filter parameters

2030 — Filtering prediction area using filter parameters

2040 — Encoding the block using the filtered prediction area

**FIG. 21**

2100

1910 — Obtaining prediction area in a reference picture for a block of a ccurent picture

2110 — use of filtered prediction area ?

yes → 1920 — Obtaining filter parameters

1930 — Filtering prediction area using filter parameters

1940 — Decoding the block using the filtered prediction area

no → 2120 — Decoding the block using the prediction area

**FIG. 22**

**FIG. 23**

**FIG. 24**

A   ←→   NET   ←→   B

# FIG. 25

| H | PAYLOAD |
|---|---------|

# FIG. 26

EUROPEAN SEARCH REPORT

Application Number

EP 25 30 5045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/243224 A1 (SU YEPING [US] ET AL) 6 October 2011 (2011-10-06) * claims 66, 70,75; figures 2, 3, 5 * ----- | 1-15 | INV. H04N19/117 H04N19/176 H04N19/70 H04N19/82 |
| X | WEIJIE BAO ET AL: "Joint Reference Frame Synthesis and Post Filter Enhancement for Versatile Video Coding", ARXIV.ORG, CORNELL UNIVERSITY LIBRARY, 201 OLIN LIBRARY CORNELL UNIVERSITY ITHACA, NY 14853, 28 April 2024 (2024-04-28), XP091740505, * page 1 - page 7; figures 1, 3 * ----- | 1-15 | |

TECHNICAL FIELDS
SEARCHED      (IPC)

H04N

The present search report has been drawn up for all claims

| Place of search | Date of completion of the search | Examiner |
|---|---|---|
| Munich | 21 July 2025 | Giuliani, Nicola |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 25 30 5045

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2025

| Patent document cited in search report | Publication date | Patent family member(s) | Publication date |
|---|---|---|---|
| US 2011243224 A1 | 06-10-2011 | BR PI0714119 A2 | 01-01-2013 |
| | | CN 101491099 A | 22-07-2009 |
| | | EP 2041982 A2 | 01-04-2009 |
| | | JP 5351020 B2 | 27-11-2013 |
| | | JP 2009543521 A | 03-12-2009 |
| | | KR 20090037888 A | 16-04-2009 |
| | | US 2011243224 A1 | 06-10-2011 |
| | | WO 2008008331 A2 | 17-01-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. CHEN** ; **Y. YE** ; **S. KIM**. JVET-T2002. *Algorithm description for Versatile Video Coding and Test Model*, vol. 11

- **B. D. LUCAS** ; **T. KANADE**. An iterative image registration technique with an application to stereo vision. *Proceedings of Imaging Understanding Workshop*, 1981, 121-130